# EUROPEAN PATENT APPLICATION

(11) **EP 4 761 301 A1**
(43) Date of publication of application: **17.06.2026**
(21) Application number: 24220205.9
(22) Date of filing: 16.12.2024
(51) Int. Cl.: H04W 4/40, H04W 4/44, H04W 4/46

(54) **INTELLIGENT TRANSPORT SYSTEM AND METHOD FOR IMPROVING ROAD SAFETY, METHODS FOR ROAD USERS AND ELECTRONIC DEVICE**

(71) Applicant: VOLKSWAGEN AG, 38440 Wolfsburg (DE)
(72) Inventor: Diekhake, Dr. Patrick, 38440 Wolfsburg (DE); Racu, Dr. Razvan, 38440 Wolfsburg (DE)

(57) **Abstract**

The invention refers to an intelligent transport system (10) and a method for improving road safety. Further, the invention pertains to a method for a first road user (16) and a method for a second road user (20). Moreover, the invention relates to an electronic device (24) and to computer programs.

It is provided that a detected event (18) by a road user (16) and/or a road infrastructure (14) is broadcasted to the environment via a direct communication signal including a cloud-upload-information indicating whether the event (18) has been uploaded to a backend server (12) or not. Based on the cloud-upload-information, surrounding road users (20, 22, 24) receiving the direct communication signals know whether an upload of the detected event (18) to the backend server (12) is required or not. Therefore, redundant uploads of the detected event (18) to the backend server (12) by other road users (20, 22, 24) which are connected to or connectable with the backend server (12) may be prevented.

## Description

The invention refers to an intelligent transport system and a method for improving road safety. Further, the invention pertains to a method for a first road user and a method for a second road user. Moreover, the invention relates to an electronic device and to computer programs.

Vehicle to Everything (V2X) communications are set to become one of the key pillars to increase safety and efficiency in road transportation. For V2X communication different kinds of technologies are available, which are used, among other things, to exchange hazard information.

An example of a V2X communication is the concept of direct communication (or ad-hoc communication) in which information is transmitted between vehicles only in the immediate vicinity (e.g. up to a radius of 1 km) of the transmitter of the communication signal. These communication signals and their associated data can only be received by vehicles within this radius if they support the direct communication technology, and if the data received is not deemed relevant to the receiving vehicle, it is discarded by the vehicle.

Another example of an inter-vehicle communication is network communication. In network-based implementations, the vehicles are connected to, for example, a cloud network and exchange data therewith. A vehicle that detects an event uploads it to the cloud network. Other vehicles can then download the event to be alerted to the event.

### State of the art

Document FR 3 100 203 A1 relates to a method and a device for warning a vehicle in which information representative of road conditions in a determined area of a road environment are received and compared with a history of information representative of road conditions associated with the determined area. An alert is outputted based on the result of the comparison.

Document EP 4 307 269 A1 suggests a Cooperative Intelligent Transport Systems (C-ITS). In response to detecting a situation involving an object detected within an area monitored by the ITS, a Collective Perception Message (CPM) is generated and transmitted. The CPM comprises a reference to the object and an indication to indicate that object is involved in the situation.

Document WO 2015 / 133 181 A1 pertains to a communication apparatus, a communication control method, and a program. A reception unit receives messages transmitted from transmission source apparatuses and indicating information and the identifiers of the respective transmission source apparatuses. A control unit executes, in accordance with the types of the messages received by the reception unit, a transmission operation to transmit, as a representative of the particular messages indicating the same information and received from the different transmission source apparatuses identified by the different identifiers, a representative message indicating the same information.

### Description of the invention

In direct communication applications, events are shared with everyone via local broadcasting, but only in a limited range, e.g. in the immediate vicinity of the broadcaster. Although this means that external events can generally be collected by receiving vehicles, these vehicles will discard any events that are deemed irrelevant with respect to the respective receiving vehicle. In network-based applications, the focus is on downloading events, and only events that are detected by a vehicle itself are considered in the upload path.

Even if vehicles upload received events detected from other vehicles into a cloud, the communication network will be unduly congested and the cloud will be enriched with a plurality of redundant data about the events, thereby ending up in slow and congested databases. Therefore, there is a general demand to further improve road safety.

This problem is solved by the intelligent transport system and method for improving road safety, the method for a first road user, the method for a second user, the electronic device and the computer programs according to the independent claims. Further advantages and embodiments will become apparent from the dependent claims as well as the following description.

According to an aspect of the invention, an intelligent transport system (ITS) for improving road safety is provided. ITSs may generally use a range of technologies to monitor, evaluate and manage transport systems to improve safety and efficiency, e.g. traffic flow. For example, they link transport infrastructure and vehicles using information and communication technologies, computers, electronics and sensors.

The ITS comprises a backend server, a road infrastructure and/or a first road user, a second road user and a third road user. Each of the road users includes an electronic device. The backend server includes at least one remotely located server which is accessible from any location at any time via a secure and protected Internet connection. In other words, the backend server represents a storage location of a cloud outside of the user's location to which data, applications and computing power may be moved and where these data may be processed. The road infrastructure may be a road side unit (RSU). A Roadside Unit (RSU) is a device which may be used in ITS and connected vehicle environments. The RSU may be disposed alongside roads or highways to facilitate communication between vehicles and the transportation infrastructure, e.g. for enabling Vehicle-to-Infrastructure (V2I) and V2X communication. The RSU includes a communication module configured to exchange information with vehicles in the vicinity of the RSU. For example, the communication module may be configured to provide communications such as Dedicated Short-Range Communication (DSRC) or Cellular Vehicle-to-Everything (C-V2X) communication.

The (first) electronic device of the first road user and/or the road infrastructure are (each) configured to detect an event in its environment concerning a threat to road safety and upload at least a part of the information associated with the detected event to the backend server based on whether a connection to the backend server is possible. In other words, the road infrastructure and/or the first electronic device of the first road user may be configured to determine whether a connection between the road infrastructure and/or the first electronic device of the first road user and the backend server is possible. If it is determined that the connection is possible, the road infrastructure and/or the first electronic device of the first road user uploads the information associated with the detected event to the backend server and if no connection is possible, the road infrastructure and/or the first electronic device of the first road user does not upload the information associated with the detected event to the backend server.

The first electronic device of the first road user and/or the road infrastructure are (each) further configured to broadcast a (first) road user to Everything (R2X) and/or an Infrastructure to road user (I2R) direct communication signal including information associated with the detected event. More specifically, the first electronic device may include a R2X communication module, a sensor unit configured to at least partially scan the environment of the first electronic device for events concerning a threat to road safety, e.g. such as at least one camera or a surround view camera system, and a processor configured to detect an event in its environment concerning a threat to road safety by using the sensor unit (and processing corresponding sensor data) and to broadcast a R2X and/or I2R direct communication signal including information associated with the detected event by using the R2X communication module. The R2X and/or I2R direct communication signal may include an event type, an event position, an event time at which the event was detected and/or a type of the detection means for detecting the event, such as a (front and/or rear) camera or a surround view camera system. Direct communication enables a road user and/or a road infrastructure and other road users to directly communicate between themselves. In other words, the communication between the road users and/or the road infrastructure is not performed via an external communication server or communication node. For example, the, some or each of the road users may be (each) a vehicle in which the electronic device is incorporated, e.g. as part of the control unit and various sensors of the vehicle. In this case, reference is made to Vehicle-to-Everything (V2X) and Infrastructure-to-Vehicle (I2V) communication. V2X communication has enabled the information exchange between vehicles and other nodes and/or may include Vehicle-to-vehicle (V2V), Vehicle-to-Infrastructure (V2I), Vehicle-to-Network (V2N), and/or Vehicle-to-Pedestrian (V2P), for example.

The (broadcasted) RX2 and/or I2R direct communication signal further includes a cloud-upload-information indicating whether the event has been uploaded to the backend server or not. The cloud-upload-information may include that the event has been uploaded to the backend server by the transmitter of the direct communication signal ("Yes"), the event has not been uploaded to the backend server ("No") and/or the event has been uploaded to the backend server by anyone else than the transmitter of the direct communication signal ("Not Needed"). Due to the additional cloud-upload-information included in the direct communication signals, unwanted repetitive uploads based on multiple and redundant messages from received direct communication signals from road users to the backend server, which would normally occur due to the broadcast principle of direct communication, are prevented. Events from road users and/or road infrastructures which are not connectable with or currently not connected with the backend server (no cloud connection, cloud connection currently unavailable) can still be uploaded to the backend server but without having the risk of congesting the databases of the backend server with unnecessary and redundant information about the detected event. In other words, the resulting database of the backend server is relatively lean and includes information of a high level of quality.

The (second) electronic device of the second road user is configured to receive the R2X and/or I2R direct communication signal (broadcasted by the first road user and/or the road infrastructure) and upload at least a part of (e.g. in its entirety) the information associated with the detected event to the backend server based on the cloud-upload-information. In other words, the second electronic device is configured to be connected with the backend server for data exchange. Instead of (automatically) discarding the received information about the detected event due to (spacial and/or temporal) irrelevance for the second electronic device, the second electronic device may generally provide the received information about the detected event to the backend server, thereby enriching its data base. The uploaded data may be relevant to other road users. Therefore, the upload of data received from the environment through direct communication signals can help to increase the road safety through the existence of more enriched data bases with more accurate knowledges of the surrounding environments of road users and/or road infrastructures. Advantageously, the number of road user crashes can be significantly reduced as well as the number of associated fatalities. However, if the cloud-upload-information indicates that the information about the detected event has already been uploaded to the backend server, the second electronic device does not upload the received information about the detected event to the backend server to prevent a redundant upload of the same information about the detected event to the backend server. Advantageously, the resulting database of the backend server is relatively lean and includes information of a high level of quality. Events may be recognized as the same or equivalent events based on information about the events, e.g. an event position, a heading of the road user and/or road infrastructure, a detection time of the event, an event-history match and so on. The, some or each of the electronic devices disclosed herein and/or the road infrastructures may be configured to recognize same or equivalent events based on information about the events, e.g. as mentioned above. Due to the event matching, a redundant upload of information about detected same or equivalent events to the backend server may be prevented.

The (third) electronic device of the third road user is configured to download at least the part of the information associated with the detected event from the backend server and to determine a relevance of the detected event for the third road user based on the information associated with the detected event. The third electronic device is further configured to output the determined relevance and/or prepare a countermeasure based the determined relevance of the detected event. For example, the downloaded part of the information may comprise at least one of an event type, an event position, an event time at which the event was detected, a type of the detection means for detecting the event and a warning associated with the detected event. Some or each of the enumerated information may be used to determine the relevance of the detected event for the third road user. The warning may be output to the third road user based on the determined relevance, e.g. if the determined relevance exceeds a predetermined threshold. Accordingly, the third road user may be warned and in response to the warning appropriately react to event or the prepared countermeasure may mitigate or substantially negate the risk associated with the detected event for the third road user. Accordingly, the risk of a crash of the third road user due to the event may be reduced and the road safety for the third road user (as well as surrounding road users) can be advantageously improved.

According to an embodiment, the threat to road safety may be related to a road hazard, a driving environment and/or a traffic condition in the environment of the road infrastructure and/or the first electronic device. In particular, the threat to road safety may be related to abnormal traffic conditions. "Abnormal" may mean that the traffic conditions (significantly) deviate from average or expected traffic conditions. The average or expected traffic conditions may be calculated based on historical data of traffic conditions. Examples of road hazard are a slow vehicle, a wrong-way driver, people, animals and/or obstacles on the road or a stationary vehicle, e.g. due to a breakdown or (illegal) parking. Examples of driving environments are weather, such as snow, rain, sun glare, icy roads and so on. Examples of traffic conditions are traffic jam, roadworks, accident or a passing by special emergency vehicle. For example, the particular threat to road safety may be used to determine the event type. The determined event type may be included in the R2X and/or I2R direct communication signal. Accordingly, other road users may be aware of the event type to appropriately determine the relevance of the event for the respective road user and/or to appropriately prepare countermeasures.

According to another embodiment, the second electronic device of the second road user may be configured to upload at least a part of the information associated with the detected event to the backend server if the cloud-upload-information indicates that the event has not been uploaded to the backend server. The second electronic device of the second road user may be configured to broadcast a second R2X direct communication signal including the information associated with the detected event and the cloud-upload-information set to indicate that the event has been uploaded to the backend server. Advantageously, the road users in the environment of the second road user, e.g. the first road user, receiving the second R2X direct communication signal are informed that the information associated with the detected event, which have not been uploaded before, has now been uploaded to the backend server by the second road user such that no further upload by any of the road users in the environment of the second road user is necessary. Therefore, a redundant upload of the same information about the detected event to the backend server may be prevented.

According to another embodiment, the first electronic device of the first road user may be configured to identify that the information associated with the detected event were stored in a memory of the first electronic device prior to detection of the event and to set the cloud-upload-information included in the RX2 and/or I2R direct communication signal to indicate that an upload of the event to the backend server is not needed. In other words, the event detected by the first road user is already known, e.g. due to prior direct communication signals exchanged with road users and/or road infrastructures which detected the event before the first road user and/or due to communication with the backend server where the detected event was already present in its database. Advantageously, a redundant upload of the same information about the detected event to the backend server may be prevented. Additionally or alternatively, the second electronic device of the second road user may be configured to identify that the information associated with the detected event were stored in a memory of the second electronic device prior to reception of the R2X and/or I2R direct communication signal and broadcast a second R2X direct communication signal including the information associated with the detected event and the cloud-upload-information set to indicate that an upload of the event to the backend server is not needed. Analogously, a redundant upload of the same information about the detected event to the backend server (by other road users) may be prevented.

According to another embodiment, the RX2 and/or I2R direct communication signal may further include a cloud-reference-time-information indicating the time at which the event has been uploaded to the backend server. The cloud-reference-time-information may help to recognize equivalent events. Furthermore, the cloud-reference-time-information may help to determine whether the detected event is still relevant for a particular road user at the determination of the relevance of the detected event for the particular road user and/or whether the detected event may be considered as terminated. Therefore, the likelihood of redundant uploads of the same information about the detected event to the backend server may be further decreased.

According to another embodiment, the second electronic device may be configured to broadcast a third R2X direct communication signal including a cooperative awareness message (CAM) for indicating the presence of the second road user to surrounding road users and/or road infrastructures. A CAM is a message which is generated periodically with a frequency controlled by the originating electronic device of the road user and which may include speed, position and steering or direction of the own electronic device of the road user, e.g. of the vehicle, and optionally of surrounding road users, e.g. vehicles, as defined in the ETSI standard EN 302 637-2 V1.4.1 (2019-04). The CAM may be extended to include a cloud-connected-information indicating whether the electronic device is connected to the backend server or not. Based on the cloud-connected-information, the surrounding road users are informed about whether and which of the road users are connected to the (or any) backend server. Furthermore, the CAM may be set to be allowed to be forwarded once by a receiver of the third R2X direct communication signal. In other words, the CAM may be forwarded by its receiver within a single hop distance, i.e. a hoplimit of 1, to allow to indirectly communicate with other road users in the hop distance of the receiver of the CAM via the receiver of the CAM.

The road infrastructure and/or the first electronic device may be further configured to receive and forward the third R2X direct communication signal via broadcast and to receive and forward one or more R2X direct communication response signals, e.g. a CAM corresponding to the above mentioned CAM (including the cloud-connected-information and a hoplimit set to 1), to the forwarded third R2X direct communication signal via broadcast. In other words, the road infrastructure and/or the first electronic device is used as a node to exchange direct communication signals between road users which may usually be not in range of a direct communication between each other. Advantageously, the information about the presence of road users connected to the backend server within the range of the direct communication of the road infrastructure and/or the first electronic device is distributed therebetween.

The second electronic device may be further configured to receive the one or more R2X direct communication response signals and to determine whether a plurality of road users connected to the backend server are present in the environment of the first road user and/or the road infrastructure. If a plurality of road users connected to the backend server is determined to be present in the environment of the first road user and/or the road infrastructure, the information associated with the detected event may be uploaded (from the second electronic device) to the backend server further based on a predetermined condition. If there is no plurality of road users connected to the backend server determined, the second electronic device may upload the information associated with the detected event to the backend server. The predetermined condition may prioritize which of the plurality of road users connected to the backend server is eligible to upload the information associated with the detected event to the backend server. In other words, a consensus algorithm to determine which of the plurality of connected road users shall upload the information about the detected event is provided. Therefore, even in complex situations in which a plurality of road users is connected to the backend server, the information about the detected event may be uploaded to the backend server, while a redundant upload of the same information about the detected event to the backend server may be prevented.

According to another embodiment, the predetermined condition may refer to or correspond to a distance to the first road user and/or a connectivity to the backend server. For example, the road user having the lowest distance to the first road user may be eligible to upload the information associated with the detected event to the backend server. The lowest distance may ensure that the quality of the direct communication signals are as high as possible such that a corruption of the signals is kept as low as possible. The connectivity may be rated based on stability of the connection and/or the speed of the connection. For example, the road user with the most stable and/or fastest connection to the backend server may be eligible to upload the information associated with the detected event. Advantageously, the resulting database of the backend server includes information of a high level of quality.

According to another embodiment, the distance to the first road user and/or the road infrastructure is determined based on location information present in the exchanged CAMs, such as Global Navigation Satellite (GPS) coordinates, for example, and/or by time-of-flight-measurements of direct communication signals exchanged between the road users. Since the distances between the road users may be calculated based on exchanged CAMs, the prioritization of the road user eligible to upload the information associated with the detected event based on the distance may be implemented easily, thereby providing a low cost solution.

According to another embodiment, the broadcasted R2X and/or I2R direct communication signal may include or consist of a Decentralized Environmental Notification Message, DENM, associated with the detected event which is extended with the cloud-upload-information. In other words, the road infrastructure and/or the first electronic device may be (each) configured to broadcast a R2X and/or I2R direct communication signal including or consisting of a DENM associated with the detected event which is extended with the cloud-upload-information. A DENM is a message about location and traffic data as well as traffic situations and hazards that is exchanged between road users which is defined in the ETSI standard EN 302 637-3 V1.2.2 (2014-11). The DENM includes information about both the sending road user as well as the event, e.g. a hazard area, to warn other road users. The DENM extended with the cloud-upload-information may be transmitted as a standalone message. Using a standalone message for the (extended) DENM allows to use well-established and standardized protocols, thereby reducing the communication effort and increasing the chance that other road user receiving the DENM are also able to process or extract its information accordingly.

According to another embodiment, the second electronic device may be further configured to broadcast a second R2X direct communication signal including a CAM for indicating the presence of the second road user to surrounding road users and/or road infrastructures. The road infrastructure and/or the first electronic device may be further configured to receive the second R2X direct communication signal and to broadcast or repeatedly broadcast the R2X and/or I2R direct communication signal including the information associated with the detected event in response to the received the second R2X direct communication signal. Since the transmitter of a direct communication signal does not receive any responses for acknowledging the reception of the communication signal, the transmittal or re-transmittal of the direct communication signal in response to a received CAM message of the second road user provides a high chance that the second road user will still be in range of the direct communication so as to receive the transmitted direct communication signal from the first road user and/or the road infrastructure. Thus, it is very likely, that the information associated with the detected event will be received and uploaded in the backend server by the second road user.

According to another embodiment, the first R2X and/or I2R direct communication signal, the second R2X direct communication signal and/or the third R2X direct communication signal (or each of the direct communication signals disclosed herein) may be based on a connectionless communication. The upload from the second road user to and/or the download from the third road users from the backend server (or any communication of each of the electronic devices with the backend server disclosed herein) may be based on a connection oriented communication. Advantageously, the information about the detected event can be exchanged by using or combining different communication techniques, such as connectionless and connection oriented communications and direct and cloud communications.

According to another embodiment, the second electronic device may be configured to determine a relevance of the detected event for the second road user based on the information associated with the detected event and to output the determined relevance and/or prepare a countermeasure based the determined relevance of the detected event, before the upload of the information associated with the detected event to the backend server starts. In other words, the receiving electronic device evaluates the relevance of the received information about the detected event for itself prior to uploading the information to the backend server. Advantageously, the second electronic device may earlier prepare and perform countermeasures to mitigate the risk associated with the detected event for the second road user.

According to another embodiment, the first electronic device of the first road user and/or the road infrastructure may not be connected to or may not support a communication with the backend server. In other words, the first electronic device and/or the road infrastructure is not able to upload the detected event to the backend server by itself. In this case, the first electronic device and/or the road infrastructure is configured to broadcast a R2X and/or I2R direct communication signal including information associated with the detected event with a cloud-upload-information indicating that the event has not been uploaded to the backend server. Advantageously, the second electronic device may upload the detected event and due to the upload of the detected event via the second electronic device, the information about the detected event are not lost, e.g. due to a lack of connection or due to a lack of relevance in view of a particular electronic device, and may be used to warn other road users about the detected event.

According to another embodiment, the second electronic device may be configured to automatically upload the information associated with the detected event to the backend server based on the cloud-upload-information. In other words, the second electronic device uploads the received information associated with the detected event to the backend server without requiring any user interaction. Compared to manual cloud entries of third party events in which the position information of the manual entries in the cloud may be inaccurate, e.g. due to a time-delayed entry, the automatically uploaded information of the event has a high level of confidence. Due to the high quality of the information, such an event does not require additional confirmation of the backend server, thereby significantly reducing the computational load for enriching the data base of the backend server.

According to another aspect of the invention, a method for improving road safety is provided. The method may be used for the above-mentioned ITS. The features and the advantages of the ITS can be applied analogously to the method for improving road safety.

According to a step of the method, an event concerning a threat to road safety by a road infrastructure and/or a first road user in its and/or his environment is detected, e.g. by the first electronic device of the first road user and/or the road infrastructure of the ITS.

According to another step of the method, at least a part of the information associated with the detected event is uploaded from the road infrastructure and/or the first road user to a backend server based on whether a connection to the backend server is possible.

According to another step of the method, a road user to Everything, R2X, and/or an Infrastructure to road user, I2R, direct communication signal including information associated with the detected event is broadcasted by the road infrastructure and/or the first road user. The RX2 and/or I2R direct communication signal includes a cloud-upload-information indicating whether the event has been uploaded to the backend server or not.

According to another step of the method, the R2X and/or I2R direct communication signal is received by a second road user.

According to another step, at least a part of the information associated with the detected event is uploaded from the second road user to the backend server based on the cloud-upload-information.

According to another step of the method, at least the part of the information associated with the detected event is downloaded from the backend server by a third road user.

According to another step of the method, a relevance of the detected event for the third road user is determined (e.g. by the third road user) based on the information associated with the detected event.

According to another step of the method, the determined relevance of the detected event is outputted and/or a countermeasure based the determined relevance of the detected event is prepared (e.g. by the third road user).

According to another aspect of the invention, a method for a road infrastructure and/or a first road user is provided. The features and the advantages of the above-mentioned method for improving road safety can be applied analogously to the method for the road infrastructure and/or the first road user.

According to a step of the method for the road infrastructure and/or the first road user, an event concerning a threat to road safety is detected by the road infrastructure and/or the first road user in its and/or his environment.

According to another step of the method for the road infrastructure and/or the first road user, at least a part of the information associated with the detected event is uploaded to a backend server based on whether a connection to the backend server is possible.

According to another step of the method for the road infrastructure and/or the first road user, a road user to Everything, R2X, and/or an Infrastructure to road user, I2R, direct communication signal including information associated with the detected event is broadcasted by the road infrastructure and/or the first road user. The RX2 and/or I2R direct communication signal includes a cloud-upload-information indicating whether the event has been uploaded to the backend server or not.

According to another aspect of the invention, a method for a second road user is provided. The features and the advantages of the above-mentioned method for improving road safety can be applied analogously to the method for the second road user.

According to a step of the method for the second road user, a road user to Everything, R2X, and/or an Infrastructure to road user, I2R, direct communication including information associated with an event detected by another road user and/or a road infrastructure and including a cloud-upload-information indicating whether the event has been uploaded to a backend server or not is received by the second road user.

According to another step of the method for the second road user, at least a part of the information associated with the detected event is uploaded from the second road user to the backend server based on the cloud-upload-information.

According to another aspect of the invention, an electronic device configured to perform the above-mentioned method for a road infrastructure and/or a first road user and/or for a second road user is provided. The electronic device may be implemented as part of a control unit for a vehicle. The control unit may be configured to perform the above-mentioned method for a road infrastructure and/or a first road user and/or for a second road user. The features and the advantages of the above-mentioned method for a road infrastructure and/or a first road user can be applied analogously to the electronic device and the control unit. For example, a road user may include the above-mentioned electronic device configured to perform the above-mentioned method for a road infrastructure and/or a first road user and/or for a second road user. The road user may be a vehicle including a V2X communication module and the above-mentioned control unit. The features and the advantages of the above-mentioned electronic device can be applied analogously to the road user.

Each of the above-mentioned electronic devices and/or control units may be implemented by electrical or electronic parts or components (hardware) or by firmware (ASIC). Additionally or alternatively, the functionality of the electronic devices and/or control units may be realized when executing a suitable program (software). Also, the electronic devices and/or control units may be realized by a combination of hardware, firmware and/or software. For example, individual components of the electronic devices and/or control units for providing individual functionalities may be designed as a separate integrated circuits or may be arranged on a common integrated circuits.

The individual components of the electronic devices and/or control units may be designed as one or more processes running on one or more processors in one or more electronic computing devices and generated during execution of one or more computer programs. The computing devices may be configured to cooperate with other components to implement the functionalities described herein. The instructions of the computer programs may be stored in a memory, such as a RAM element. However, the computer programs may also be stored in a non-volatile storage medium, such as a CD-ROM, flash memory or the like.

It is further apparent to the skilled person that the functionalities of a plurality of computing units (data processing devices) may be combined or combined in a single device, or that the functionality of a particular data processing device may be distributed among a plurality of devices to implement the functionality of the electronic devices and/or control unit.

A further aspect relates to a computer program comprising instructions which, when the program is executed by a computer, such as an electronic devices and/or control unit, cause the computer to perform any of the methods according to the invention, in particular a method for improving road safety and/or a method for a road infrastructure and/or a first road user and/or a method for a second road user.

Further preferred embodiments of the invention result from the additional features mentioned in the dependent claims.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings. It shows:
- Fig. 1: schematically shows an intelligent transport system in an exemplary traffic situation according to an embodiment;
- Fig. 2: schematically shows the intelligent transport system in another exemplary traffic situation according to an embodiment;
- Fig. 3: schematically shows the intelligent transport system of Fig. 2 according to another embodiment
- Fig. 4: schematically shows a flow chart of a method for improving road safety according an embodiment; and
- Fig.5: schematically shows an electronic device for a road user according to an embodiment.

In the following, recurring and similar features in this and in the subsequent representations are provided with the same reference numerals and a repetitive description thereof is omitted.

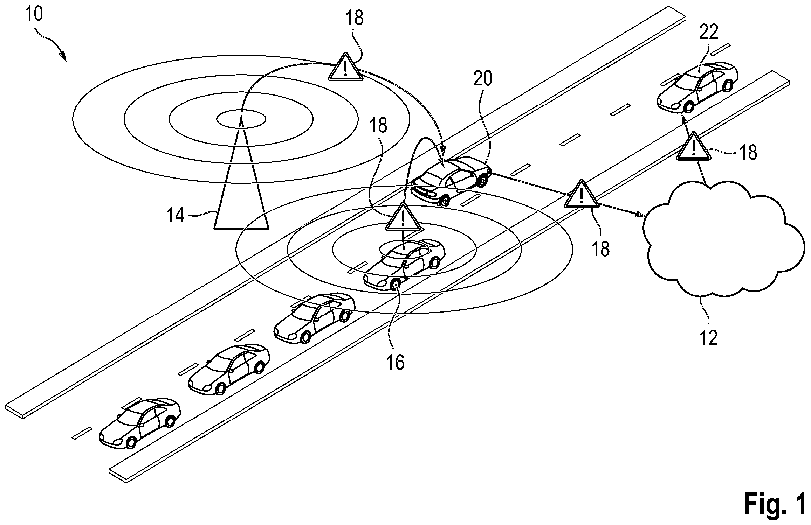

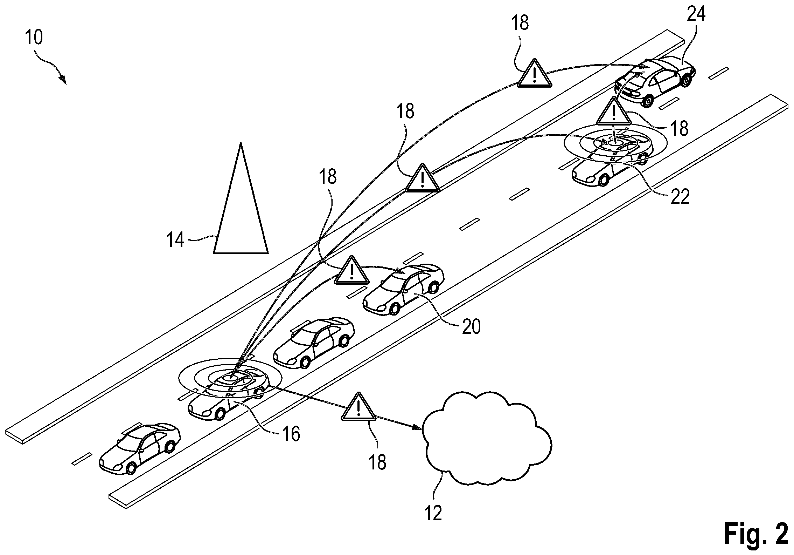

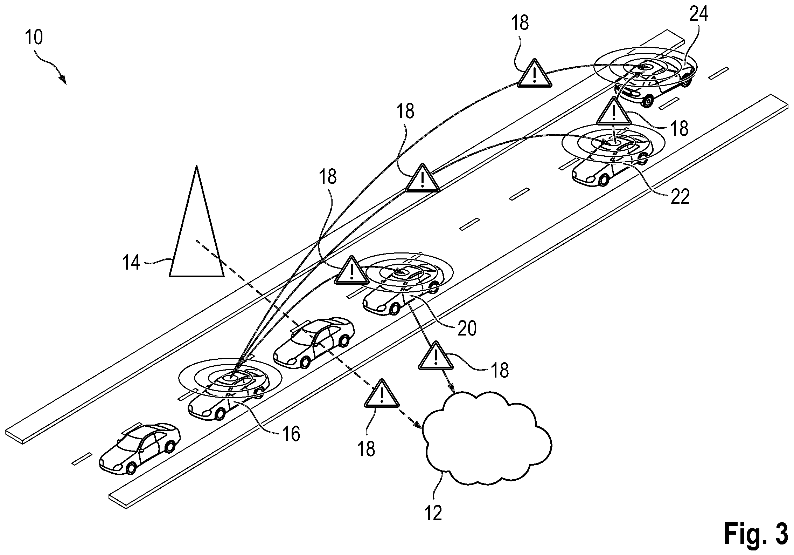

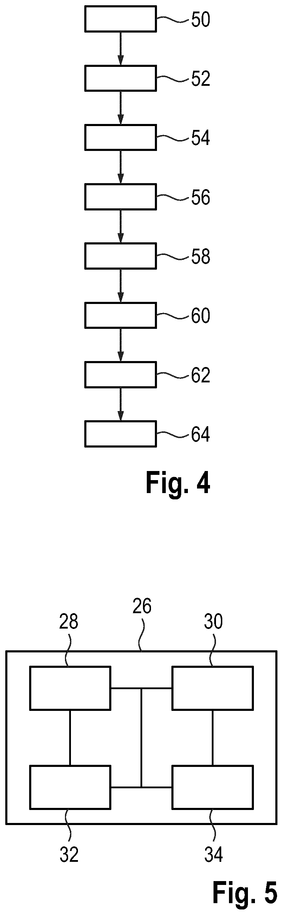

Figure 1 schematically shows an intelligent transport system (ITS) 10 for improving road safety in an exemplary traffic situation according to an embodiment. Figures 2 and 3 schematically show the ITS 10 in another exemplary traffic situation according to two different embodiments. A method for improving road safety, a method for a first road user 16 and a method for a second road user 20 are explained in reference to figure 4. The traffic situations as illustrated in figures 1 to 3 are to be understood as merely an representative examples of a plethora of potential traffic situations and the present invention is not limited thereto.

The ITS 10 includes a backend server 12, a road infrastructure 14, a first road user 16, a second road user 20 and a third road user 22. Each of the road users 16, 20, 22 includes an electronic device 26 which will be explained in more detail in view of figure 5. In an embodiment, as shown in figure 1, the road users 16, 20, 22 are implemented as vehicles. However, at least one, some or each of the road users 16, 20, 22 may also be a pedestrian or a bicycle or any other kind of road user carrying the electronic device 26, for example.

The backend server 12 is illustrated in figures 1 to 3 as a cloud to indicate that the backend server 12 provides cloud-based applications. For example, the backend server 12 includes a plurality of remotely located servers which are accessible from any location at any time via a secure and protected Internet connection. That is, the backend server 12 represents a storage location of a cloud outside of the user's location (e.g. the road users 16, 20, 22, 24) to which data, applications and computing power may be moved and where these data may be processed.

The road infrastructure 14 is implemented as a road side unit (RSU). The road infrastructure 14 is disposed alongside a road or highway (as shown in figures 1 to 3) to facilitate communication between road users 16, 20, 22, 24 and any transportation infrastructure, e.g. for enabling Vehicle-to-Infrastructure (V2I) and Vehicle-to-Everything (V2X) communication. The transportation infrastructure may comprise sensors configured to detect the traffic on the street and/or a status of a traffic light, for example. The road infrastructure 14 includes a communication module configured to exchange information with the road users 16, 20, 22, 24 in its vicinity via direct communication. In some embodiments, the communication module of the road infrastructure 14 may further be configured to communicate with the backend server 12, e.g. upload data to and/or download data from the backend server 12.

In figure 1, the first road user 16 represents a vehicle driving into the end of a traffic jam which is indicated by a queue of three vehicles standing in front of the first road user 16. This situation requires the first road user 16 to slow down to not cause an accident, e.g. a rear-end collision with the preceding vehicle. However, when a road user, such as the third road user 22 driving on the same lane as the first road user 16 with a long gap therebetween, is not aware of the end of the traffic jam and does not pay sufficient attention to the traffic, the road user may have to perform an emergency braking to not cause an accident. Emergency breaks, however, may catch following road users off guard, such that a significant risk of an accident may occur.

In the example of figure 1, the road infrastructure 14 and the first road user 16 are not connected to the backend server 12, while the second road user 20 and the third road user 22 are connected with the backend server 12. Therefore, events 18 detected by the road infrastructure 14 and/or the first road user 16 cannot be directly uploaded to the backend server 12, e.g. such that the third road user 22 would be able to download the detected event 18 to be aware of the risk associated with the event 18.

However, the road infrastructure 14 is configured to detect an event 18 in its environment concerning a threat to road safety, such as the traffic jam as shown in figure 1, and to broadcast an Infrastructure to road user (I2R) direct communication signal including information associated with the detected event 18. In addition, the electronic device of the first road user 16 is also configured to detect the event 18 and to broadcast a road user to Everything (R2X) direct communication signal including information associated with the detected event 18. The broadcasted direct communication signals are restricted in its range and only road users in the immediate vicinity, e.g. up to a radius of 1 km, of the road infrastructure 14 and the electronic device of the first road user 16 can receive the direct communication signals. As shown in the example of figure 1, the second road user 20 driving on the opposite lane with respect to the first road user 16 is in range of the direct communication signals. The third road user 22 is not in range of the direct communication signals and too far away to receive the direct communication signals. As the electronic device of the second road user 20 is configured to receive the R2X and I2R direct communication signals from the road infrastructure 14 and the first road user 16, the second road user 20 is able to receive and process the information about the detected event 18. Instead of discarding the received information about the detected event 18 due to irrelevance of the event 18 for the second road user 20, the electronic device of the second road user 20 uploads the received information about the detected event 18 to the backend server 12, thereby enriching its data base. As illustrated in figure 1, the uploaded data regarding the detected event 18 are relevant to other road users, e.g. the third road user 22. Therefore, the upload of data received from the environment through direct communication signals can help to increase the road safety through the existence of more enriched data bases with more accurate knowledges of the surrounding environments of road users 16 and road infrastructures 14. Advantageously, the number of road user crashes can be significantly reduced as well as the number of associated fatalities.

The electronic device of the third road user 22 is configured to download the information associated with the detected event 18 from the backend server 12 and to determine a relevance of the detected event 18 for the third road user 22 based on the information associated with the detected event 18. The electronic device of the third road user 22 may output the determined relevance to the driver of the vehicle and/or may prepare a countermeasure based the determined relevance of the detected event 18. The electronic device of the third road user 22 may conclude that it is required to smoothly slow the vehicle down to reduce the risk of a rear-end collision with the first road user 16 and may present an alert to the driver of the vehicle representing the third road user 22. Accordingly, the risk of a crash of the third road user 22 due to the event 18 can be reduced and the road safety for the third road user 22 (as well as following road users) can be advantageously improved.

In contrast to the traffic situation as shown in figure 1, there may be traffic situations as shown in figures 2 and 3 in which a plurality of road users 20, 22, 24 may receive the R2X and/or I2R direct communication signal and may each upload the information associated with the detected event 18 to the backend server 12. In this case, the communication network will be unduly congested and the database of the backend server 12 will be enriched with a plurality of redundant data about the events 18, thereby ending up in slow and congested databases of the backend server 12.

In order to prevent a redundant upload of the same information about the detected event 18 to the backend server 12, the road infrastructure 14 and the first electronic device of the first user 16 are configured to broadcast the R2X and/or I2R direct communication signal including a cloud-upload-information indicating whether the event 18 has been uploaded to the backend server 12 or not.

The road user receiving the R2X and/or I2R direct communication signal, e.g. the second road user 20, uploads the information associated with the detected event 18 to the backend server 12 based on the cloud-upload-information. For example, if the cloud-upload-information indicates that the information about the detected event 18 has already been uploaded to the backend server 12, e.g. by the road infrastructure 14 and/or the electronic device of the first road user 16, the electronic device of the second road user 20 does not upload the received information about the detected event 18 to the backend server 12 to prevent a redundant upload of the same information about the detected event 18 to the backend server 12. Advantageously, the resulting database of the backend server 12 is relatively lean and includes information of a high level of quality.

The traffic situation shown in figures 2 and 3 at least differ from each other in that the electronic device of the first road user 16 in figure 2 is connected with the backend server 12, while the electronic device of the first road user 16 in figure 3 is not connected or not connectable with the backend server 12.

As shown in figure 2, the electronic device of the first road user 16 detects an event 18, e.g. a traffic jam, not being present in its memory and uploads the information associated with the detected event 18 to the backend server 12. Furthermore, the electronic device of the first road user 16 broadcasts a RX2 direct communication signal including the cloud-upload-information indicating that the event 18 has been uploaded to the backend server 12 (Cloud-Upload: "Yes").

The electronic devices of the second road user 20, of the third road user 22 and a fourth road user 24 are also connected with the backend server 12 and receive the RX2 direct communication signal including the information associated with the detected event 18 and the cloud-upload-information. Due to the cloud-upload-information ("Yes"), the information associated with the detected event 18 is stored in the respect memories of the electronic devices but not uploaded to the backend server 12.

For example, the third road user 22 may also detect the event 18, i.e. the traffic jam already reported by the first road user 16. However, since the event 18 is already present in the memory of the electronic device of the third road user 22, the electronic device of the third road user 22 does not upload the information associated with the event 18 to the backend server 12. In addition, the electronic device of the third road user 22 broadcasts a RX2 direct communication signal including the cloud-upload-information indicating that the event 18 has already been uploaded to the backend server 12 by another road user (Cloud-Upload: "Not needed"). For example, road users not in range of the first road user 16 and not connected with the backend server 12 would not be able to receive the information associated with the detected event 18. However, due to the different location of the third road user 22 with respect to the first road user 16, the RX2 direct communication signal including the cloud-upload-information ("Not needed") broadcasted by the third road user 22 may be received by the mentioned road users such that also road users not in range of the first road user 16 may be warned about the detected event 18 and may be prevented from redundantly uploading the detected event 18.

In case the third road user 22 as shown in figure 2 is neither connected with the backend server 12 nor receives the RX2 direct communication signal including the cloud-upload-information ("YES") from the first road user 16, the third road user 22 may broadcast a RX2 direct communication signal upon detection of the event 18, i.e. the traffic jam, including the cloud-upload-information indicating that the information associated with the detected event 18 has not been uploaded ("NO"). Since the fourth road user 24 receives the RX2 direct communication signal including the cloud-upload-information ("YES") from the first road user 16 and the RX2 direct communication signal including the cloud-upload-information ("NO") from the third road user 22, the electronic device of the fourth road user 24 matches the events 18 and broadcasts a forwarding RX2 direct communication signal including the cloud-upload-information ("YES"). The forwarding RX2 direct communication signal including the cloud-upload-information ("YES") is received by the third road user 22 and the third road user 22 broadcasts a repetition RX2 direct communication signal including the changed cloud-upload-information (from "No" to "Not needed") to prevent any redundant upload of the information associated with the detected event 18, e.g. by other road users which received the RX2 direct communication signal, to the backend server 12.

Furthermore, upon detection of a termination of the detected event 18 through the electronic device of the first road user 16, this electronic device of the first road user 16 may upload the termination of the detected event 18 to the backend server 12 and broadcast a termination RX2 direct communication signal including the information associated with the termination of the detected event 18 and the cloud-upload-information ("YES"). The electronic devices of the second to fourth road users 20, 22, 24 may receive the termination RX2 direct communication signal including the information associated with the termination of the detected event 18 and the cloud-upload-information. Due to the cloud-upload-information ("Yes"), the information associated with the termination of the detected event 18 is stored in the respect memories of the electronic devices but not uploaded to the backend server 12.

In contrast to the embodiment as shown in figure 2, the electronic device of the first road user 16 as shown in figure 3 is not able to be connected with the backend server 12. Thus, according to this embodiment, the electronic device of the first road user 16 detects an event 18, e.g. a traffic jam, not being present in its memory and broadcasts a RX2 direct communication signal including the cloud-upload-information indicating that the event 18 has not been uploaded to the backend server 12 (Cloud-Upload: "No"). The electronic device of the second to fourth road users 20, 22, 24 receive the RX2 direct communication signal including the cloud-upload-information ("No").

In the exemplary case, that the road infrastructure 14 has detected the event 18 and uploaded it to the backend server 12 (cf. dotted arrow in figure 3), the electronic devices of the second to fourth road users 20, 22, 24 may have downloaded the detected event 18 from the backend server 12 and decided to not upload the detected event 18 to the backend server 12 due to a match of the events 18, although the received RX2 direct communication signal included the cloud-upload-information ("No"). The electronic devices of the second to fourth road users 20, 22, 24 may broadcast forward RX2 direct communication signals including the cloud-upload-information ("Yes" or "Not needed") to prevent redundant uploads of information associated with the detected event 18. For example, the first road user 16 may receive at least one of the broadcasted forward RX2 direct communication signals from one of the second to fourth road users 20, 22, 24 including the cloud-upload-information "Not needed". Then, the first road user 16 may change the cloud-upload-information from "No" to "Not needed" in its follow up RX2 direct communication signal(s) for the event 18 to prevent any redundant upload of the information by other road users receiving the RX2 direct communication signals of the first road user 16.

In the different case that the road infrastructure 14 has not detected the event 18 nor uploaded it to the backend server 12, i.e. the detected event 18 is not stored in the backend server 12, none of the electronic devices of the second to fourth road users 20, 22, 24 has stored a corresponding event 18 in its memory. Therefore, any of the electronic devices of the second to fourth road users 20, 22, 24 could upload the information associated with the detected event 18. In order to prevent redundant uploads of these information, the electronic devices of the second to fourth road users 20, 22, 24 may be configured to broadcast a third R2X direct communication signal including a cooperative awareness message (CAM) for indicating the presence of the road users 20, 22, 24 to surrounding road users 16, 20, 22, 24 and, for example, the road infrastructure 14. The CAM is extended to include a cloud-connected-information indicating whether the respective electronic device is connected to the backend server 12 or not.

Based on the cloud-connected-information, the surrounding road users 16, 20, 22, 24 are informed about whether and which of the road users 20, 22, 24 are connected to the backend server 12. Furthermore, the CAM is set to be allowed to be forwarded once by a receiver of the third R2X direct communication signal to allow to indirectly communicate with other road users 20, 22, 24 in the hop distance of the first road user 16. For example, based on exchanged CAMs, the first road user 16 may aggregate the CAM information received from each of the second to fourth road users 20, 22, 24 into one list und broadcast a CAM including the list. The second to fourth road users 20, 22, 24 may receive the CAM including the list to be aware of the respective other road users. In other words, the electronic devices of each of the second to fourth road users 20, 22, 24 may be further configured to determine whether a plurality of road users 20, 22, 24 connected to the backend server 12 is present in the environment of the first road user 16 and/or the road infrastructure 14.

As the second to fourth road users 20, 22, 24 are determined to be present in the environment of the first road user 16 and/or the road infrastructure14, the information associated with the detected event 18 is uploaded from the second electronic device of the second road user 20 to the backend server 12 based on a predetermined condition. The predetermined condition prioritizes which of the plurality of road users 20, 22, 24 connected to the backend server 12 is eligible to upload the information associated with the detected event 18 to the backend server 12. In the figure 3, the predetermined condition is a shortest distance and as the second road user 20 has the lowest distance to the first road user 16. Therefore, the second road user 20 is eligible to upload the information associated with the detected event 18 to the backend server 12. The second road user 20 broadcasts a forward R2X direct communication signal including information associated with the detected event 18 and the cloud-upload-information ("Yes"). Therefore, the third and fourth road users 22, 24 as well as following road users driving into the range of the direct communication signal are prevented from uploading the information associated with the detected event 18 to the backend server 12. For example, the first road user 16 may receive the broadcasted forward RX2 direct communication signal from the second road user 20 including the cloud-upload-information "Yes". Then, the first road user 16 may change the cloud-upload-information from "No" to "Yes" in its follow up RX2 direct communication signal(s) for the event 18 to prevent any redundant upload of the information by other road users receiving the RX2 direct communication signals of the first road user 16.

Any of the RX2 direct communication signals mentioned herein may further include at least one or more information regarding an event type, an event quality, a time stamp, an action-ID, a station-ID, a position, a heading and a hoplimit.

Figure 4 schematically shows a flow chart of a method for improving road safety according to an embodiment which may be used for any of the ITS 10 of figures 1 to 3.

According to a first step 50 of the method, an event 18 concerning a threat to road safety by a road infrastructure 14 and/or a first road user 16 in its and/or his environment is detected, e.g. by the first electronic device of the first road user 16 and/or the road infrastructure 14 of the ITS 10.

According to a second step 52, at least a part of the information associated with the detected event 18 from the road infrastructure 14 and/or the first road user 16 is uploaded to a backend server 12, by the road infrastructure 14 and/or the first road user 16, based on whether a connection to the backend server 12 is possible.

According to a third step 54, a R2X and/or an I2R direct communication signal including information associated with the detected event 18 is broadcasted by the road infrastructure 14 and/or the first road user 16. The RX2 and/or I2R direct communication signal includes a cloud-upload-information indicating whether the event 18 has been uploaded to the backend server 12 or not.

According to a fourth step 56, the R2X and/or I2R direct communication signal is received by a second road user 20.

According to a fifth step 58 of the method, at least a part of the information associated with the detected event 18 is uploaded from the second road user 20 to the backend server 12 based on the cloud-upload-information.

According to a sixth step 60, at least the part of the information associated with the detected event 18 is downloaded from the backend server 12 by a third road user 22.

According to a seventh step 62, a relevance of the detected event 18 for the third road user 22 is determined based on the information associated with the detected event 18.

According to an eighth step 64, the determined relevance of the detected event 18 is outputted and/or a countermeasure based the determined relevance of the detected event 18 is prepared, e.g. by the electronic device of the third road user 22.

The method steps related to the first road user 16 may be considered as a further method according to the present invention and the method steps related to the second road user 20 may be considered as another method according to the present invention. That is, figure 4 also schematically shows a flowchart of a method for a first road user 16 and a flowchart of a method for a second road user 20. The method for a first road user 16 includes the first to third steps 50 to 54 and the method for a second user 20 includes the fourth and fifth steps 56 and 58.

Fig. 5 schematically shows an electronic device 26 for a road user according to the present invention. The electronic device 26 may correspond to the electronic device of the first road user 16 and/or the second road user 20. However, the present disclosure is not limited thereto and some or each of the road users 16, 20, 22, 24 as shown in figures 1 to 3 may each include the electronic device 26 as shown in figure 5.

The electronic device 26 includes a R2X communication module 28, a sensor unit 30 configured to at least partially scan the environment of the electronic device 26 for events 18 concerning a threat to road safety, a processor 32 and a memory 34. The sensor unit 30 may include at least one camera or a camera system including a plurality of cameras, e.g. a surround view camera system. The processor 32 is configured to detect an event 18 in its environment concerning a threat to road safety by using the sensor unit 30 (and processing corresponding sensor data) and to broadcast and/or receive a R2X direct communication signal including information associated with the detected event 18 including a cloud-upload-information indicating whether the event 18 has been uploaded to the backend server 12 by using the R2X communication module 28. The R2X direct communication signal may include an event type, an event position, an event time at which the event 18 was detected and/or a type of the detection means for detecting the event 18.

The direct communication and/or the communication with the backend server 12 and between the road users 16, 20, 22, 24 and/or the road infrastructure 14 may be based on exchanged radio frequency (RF) signals, such as Bluetooth, Ultra-Wide-Band, Wireless-LAN, 4G and/or 5G mobile telecommunication technologies, for example. However, the present invention is not limited thereto.

### Reference signs

- 10: intelligent transport system
- 12: backend server
- 14: road infrastructure
- 16: first road user
- 18: event concerning a threat to road safety
- 20: second road user
- 22: third road user
- 24: fourth road user
- 26: electronic device
- 28: communication module
- 30: sensor unit
- 32: processor
- 34: memory

- 50: first method step - detecting an event
- 52: second method step - uploading event
- 54: third method step - broadcasting direct communication signal
- 56: fourth method step - receiving direct communication signal
- 58: fifth method step - uploading the detected event
- 60: sixth method step - downloading the detected event
- 62: seventh method step - determining relevance of the event
- 64: eighth method step - outputting the determined relevance

## Claims

1. An intelligent transport system, ITS, (10) for improving road safety, comprising:
- a backend server (12),
- a road infrastructure (14) and/or a first road user (16) including a first electronic device, the road infrastructure (14) and/or the first electronic device being configured to:
detect an event (18) in its environment concerning a threat to road safety,
upload at least a part of the information associated with the detected event (18) to the backend server (12) based on whether a connection to the backend server (12) is possible and
broadcast a road user to Everything, R2X, and/or an Infrastructure to road user, I2R, direct communication signal including information associated with the detected event (18), wherein the RX2 and/or I2R direct communication signal includes a cloud-upload-information indicating whether the event (18) has been uploaded to the backend server (12) or not,
- a second road user (20) including a second electronic device configured to:
receive the R2X and/or I2R direct communication signal and
upload at least a part of the information associated with the detected event (18) to the backend server (12) based on the cloud-upload-information,
- a third road user (22) including a third electronic device configured to:
download at least the part of the information associated with the detected event (18) from the backend server (12),
determine a relevance of the detected event (18) for the third road user (22) based on the information associated with the detected event (18) and
output the determined relevance and/or prepare a countermeasure based the determined relevance of the detected event (18).

2. The ITS (10) according to claim 1, wherein the threat to road safety is related to a road hazard, a driving environment and/or a traffic condition in the environment of the road infrastructure (14) and/or the first electronic device.

3. The ITS (10) according to any one of the preceding claims, wherein the second electronic device of the second road user (20) is configured to:
upload at least a part of the information associated with the detected event (18) to the backend server (12) if the cloud-upload-information indicates that the event (18) has not been uploaded to the backend server (12) and
broadcast a second R2X direct communication signal including the information associated with the detected event (18) and the cloud-upload-information set to indicate that the event (18) has been uploaded to the backend server (12).

4. The ITS (10) according to any one of the preceding claims, wherein the first electronic device of the first road user (16) is configured to:
identify that the information associated with the detected event (18) were stored in a memory of the first electronic device prior to detection of the event (18) and
set the cloud-upload-information included in the RX2 and/or I2R direct communication signal to indicate that an upload of the event (18) to the backend server (12) is not needed, and/or
wherein the second electronic device of the second road user (20) is configured to:
identify that the information associated with the detected event (18) were stored in a memory of the second electronic device prior to reception of the R2X and/or I2R direct communication signal and
broadcast a second R2X direct communication signal including the information associated with the detected event (18) and the cloud-upload-information set to indicate that an upload of the event (18) to the backend server (12) is not needed.

5. The ITS (10) according to the preceding claim, wherein the RX2 and/or I2R direct communication signal further includes a cloud-reference-time-information indicating the time at which the event (18) has been uploaded to the backend server (12).

6. The ITS (10) according to any one of the preceding claims, wherein the second electronic device is further configured to:
broadcast a third R2X direct communication signal including a cooperative awareness message, CAM, for indicating the presence of the second road user (20) to surrounding road users (16, 22, 24) and/or road infrastructures (14), wherein the CAM is extended to include a cloud-connected-information indicating whether the second electronic device is connected to the backend server (12) or not and set to be allowed to be forwarded once by a receiver of the third R2X direct communication signal,
the road infrastructure (14) and/or the first electronic device is further configured to: receive and forward the third R2X direct communication signal via broadcast and receive and forward one or more response R2X direct communication signals to the
forwarded third R2X direct communication signal via broadcast, and
wherein the second electronic device is further configured to:
receive the one or more R2X direct communication response signals and
determine whether a plurality of road users (20, 22, 24) connected to the backend server (12) are present in the environment of the first road user (16) and/or the road infrastructure (14), wherein if a plurality of road users (20, 22, 24) connected to the backend server (12) is determined to be present in the environment of the first road user (16) and/or the road infrastructure (14), the information associated with the detected event (18) is uploaded to the backend server (12) further based on a predetermined condition.

7. The ITS (10) according to the preceding claim, wherein the predetermined condition corresponds to a distance to the first road user (16) and/or the road infrastructure (14) and/or a connectivity to the backend server (12).

8. The ITS (10) according to the preceding claim, wherein the distance to the first road user (16) and/or the road infrastructure (14) is determined based on location information present in the exchanged CAMs and/or by time-of-flight-measurements of direct communication signals exchanged between the road users (16, 20, 22, 24).

9. The ITS (10) according to any one of the preceding claims, wherein the broadcasted R2X and/or I2R direct communication signal includes or consists of a Decentralized Environmental Notification Message, DENM, associated with the detected event (18) which is extended with the cloud-upload-information.

10. The ITS (10) according to any one of the preceding claims, wherein the first R2X and/or I2R direct communication signal, the second R2X direct communication signal and/or the third R2X direct communication signal is based on a connectionless communication and the upload from the second road user (20) to and/or the download from the third road users (22) from the backend server (12) is based on a connection oriented communication.

11. A method for improving road safety, including the steps of:
- detecting (50) an event (18) concerning a threat to road safety by a road infrastructure (14) and/or a first road user (16) in its and/or his environment,
- uploading (52) at least a part of the information associated with the detected event (18) from the road infrastructure (14) and/or the first road user (16) to a backend server (12) based on whether a connection to the backend server (12) is possible,
- broadcasting (54) a road user to Everything, R2X, and/or an Infrastructure to road user, I2R, direct communication signal including information associated with the detected event (18) by a road infrastructure (14) and/or a first road user (16), wherein the RX2 and/or I2R direct communication signal includes a cloud-upload-information indicating whether the event (18) has been uploaded to the backend server (12) or not,
- receiving (56) the R2X and/or I2R direct communication signal by a second road user (20),
- uploading (58) at least a part of the information associated with the detected event (18) from the second road user (20) to the backend server (12) based on the cloud-upload-information,
- downloading (60) at least the part of the information associated with the detected event (18) from the backend server (12) by a third road user (22),
- determining (62) a relevance of the detected event (18) for the third road user (22) based on the information associated with the detected event (18) and
- outputting (64) the determined relevance of the detected event (18) and/or preparing a countermeasure based the determined relevance of the detected event (18).

12. A method for a road infrastructure (14) and/or a first road user (16), including the steps of:
- detecting (50) an event (18) concerning a threat to road safety by the road infrastructure (14) and/or the first road user (16) in its and/or his environment,
- uploading (52), by the road infrastructure (14) and/or the first road user (16), at least a part of the information associated with the detected event (18) to a backend server (12) based on whether a connection to the backend server (12) is possible and
- broadcasting (54), by the road infrastructure (14) and/or the first road user (16), a road user to Everything, R2X, and/or an Infrastructure to road user, I2R, direct communication signal including information associated with the detected event (18), wherein the RX2 and/or I2R direct communication signal includes a cloud-upload-information indicating whether the event (18) has been uploaded to the backend server (12) or not.

13. A method for a second road user (20), including the steps of:
- receiving (56), by the second road user (20), a road user to Everything, R2X, and/or an Infrastructure to road user, I2R, direct communication including information associated with an event (18) detected by another road user (16) and/or a road infrastructure (14), wherein the RX2 and/or I2R direct communication signal includes a cloud-upload-information indicating whether the event (18) has been uploaded to a backend server (12) or not and
- uploading (58) at least a part of the information associated with the detected event (18) from the second road user (20) to the backend server (12) based on the cloud-upload-information.

14. An electronic device (26) configured to perform the method according to claims 11 and/or 12.

15. A computer program comprising instructions which, when the program is executed by a computer, cause the computer to perform the method according to any one of claims 11 to 13.
